# EUROPEAN PATENT SPECIFICATION

(11) **EP 2 424 277 B1**
(45) Date of publication and mention of the grant of the patent: **10.07.2013**
(21) Application number: 11006931.7
(22) Date of filing: 24.08.2011
(51) Int. Cl.: H04W 4/00, H04L 29/08

(54) **Method of handling service group creation in a communication system and related communication device**
Verfahren zur Handhabung einer Dienstgruppenerstellung in einem Kommunikationssystem und zugehörige Kommunikationsvorrichtung
Procédé de gestion de création de groupe de services dans un système de communication et dispositif de communication associé

(30) Priority: 24.08.2010 US 376264 P
(43) Date of publication of application: 29.02.2012
(73) Proprietor: HTC Corporation, Taoyuan County 330 (TW)
(72) Inventor: Chien, Ho-Sung, Taoyuan City Taoyuan County 330 (TW); Yang, Ju-Ting, Taoyuan City Taoyuan County 330 (TW)
(74) Representative: Ljungberg, Robert

(56) References cited:
- EP-A1- 1 478 134
- WO-A1-2010/050643
- various: "Converged Personal Network Service Architecture", Open Mobile Alliance , vol. 1.0 15 June 2010 (2010-06-15), pages 1-34, XP002661956, Open Mobile Alliance Retrieved from the Internet: URL:http://member.openmobilealliance.org/f tp/Public_documents/ [retrieved on 2011-10-24]
- Tsuyosji Takakura, Kazunari Kubota, NTT docomo Inc: "Service Discovery", Open Mobile Alliance , 9 August 2010 (2010-08-09), XP002661957, Open Mobile Alliance Retrieved from the Internet: URL:http://member.openmobilealliance.org/f tp/Public_documents/ [retrieved on 2011-10-24]
- Sungjin Park, Samsung: "PN Management Function", Open Mobile Alliance , 23 April 2010 (2010-04-23), pages 1-3+Appendix, XP002661958, Open Mobile Alliance Retrieved from the Internet: URL:http://member.openmobilealliance.org/f tp/Public_documents/ [retrieved on 2011-10-24]
- Rachelle Yang, Joey Chien, HTC: "Recognition of Service Group information for PNE", Open Mobile Alliance , 26 August 2010 (2010-08-26), pages 1-3, XP002661959, Open Mobile Alliance Retrieved from the Internet: URL:http://member.openmobilealliance.org/f tp/Public_documents/ [retrieved on 2011-10-24]

## Description

### Background of the Invention

### 1. Field of the Invention

The present invention relates to a method used in a communication system and related communication device, and more particularly, to a method of handling creation of a service group in a communication system and related communication device.

### 2. Description of the Prior Art

The Open Mobile Alliance (OMA) is founded to develop OMA specifications for mobile services to meet users' needs. Furthermore, the OMA specifications aim to provide the mobile services which are interoperable across geographic areas (e.g. countries), operators, service providers, networks, operation systems and mobile devices. In detail, the mobile services conforming to the OMA specifications can be used by the users without restriction to particular operators and service providers. The mobile services conforming to the OMA specifications are also bearer agnostic, i.e., the bearer that carries the mobile services can be a second generation (2G) mobile system such as GSM, EDGE or GPRS, or a third generation (3G) and beyond mobile system such as UMTS, LTE or LTE-Advanced. Further, the mobile services can be executed on an operation system such as Windows, Android or Linux operated on various mobile devices. Therefore, industries providing devices or the mobile services supporting the OMA specifications can benefit from a largely growing market enabled by interoperability of the mobile services. Besides, the users use the devices or the mobile services supporting the OMA specifications can also have a better experience due to the interoperability of the mobile services.

Furthermore, Converged Personal Network Services (CPNS) is developed by the OMA to provide application-layer support for ubiquitous access to services in a converged network, which is a group of Personal Networks (PNs) that are interconnected by PN Gateways (PN GWs). In detail, an architecture of the CPNS includes three entities which are a CPNS server, a PN GW, and one or more PN elements (PNEs) . The CPNS server receives requests from the PN GW, and replies responses to the PN GW, to ensure that appropriate applications are selected and appropriate contents are provided to the PNEs via the PN GW. The PN GW severs as an intermediary entity between the PNEs and other networks that forwards the requests and the responses between the PNEs and the other networks. The PNEs are PN entities that are connected to the PN GW and between each other and are used for rendering the content received from the PN GW or from each other. The PNE can be a mobile phone, a personal computer (PC) , a music player, a car navigation system or an IP-enabled set-top box.

On the other hand, the OMA develops a concept of service group (SG) for the CPNS. The SG is composed of a CPNS server, one or more PN GWs and one or more PNEs. The intention of the service group is to group together PNEs which want to receive the same service from a CPNS server or a content provider. In other words, for those PNEs that want to receive a game service can belong to a SG receiving the game service, and for those PNEs that want to receive a music service can belong to a SG receiving the music service.

Based on the CPNS protocol specification, creation of a SG is initiated by a PNE. For a PNE which wants to reside in a first SG, the PNE may actively create the first SG for joining. However, a second SG providing the same service as the first SG that the PNE wants to reside in may have been existed already, resulting in redundant SG.

A patent publication EP 1 478 134 A1, a publication "Converged Personal Network Service Architecture" OMA (2010-06-15) XP002661956, a publication "Service Discover" OMA (2010-08-09) XP002661957, a publication "PN Management Function" OMA (2010-04-23) XP002661958, a patent publication WO 2010/050643 A1 discuss useful information in order to understand the invention.

### Summary

It is an object of the present invention to provide a method and a communication device for handling service group creation. This object can be achieved by the features of the independent claims. Further embodiments are characterized by the dependent claims.

A method of handling service group creation for a personal network element of a communication system is disclosed. The method comprises obtaining existence information of service groups in the communication system when the personal network element is going to reside in a service group, and determining whether to create or join the service group according to the existence information.

A method of handling service group creation for a personal network of a communication system is disclosed. The method comprises transmitting information associated to existence of service groups in the communication system, to at least a personal network element in the personal network when the personal network elements register the personal network.

A method of handling service group creation for a personal network element of a communication system is disclosed. The method comprises creating a first service group when the personal network element is going to reside in the first service group, obtaining existence information of service groups in the communication system, and determining whether to delete the first service group according to the existence information of the service groups.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of an exemplary communication system according to the present invention.

Fig. 2 is a schematic diagram of an exemplary communication device according to the present invention.

Figs. 3-5 are flowcharts of an exemplary process according to the present invention.

### Detailed Description

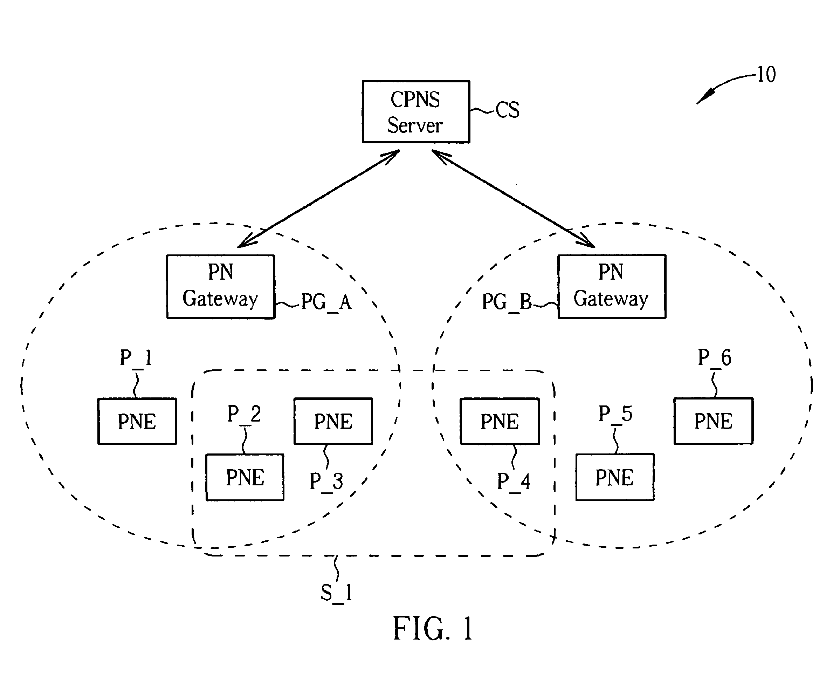

Please refer to Fig. 1, which is a schematic diagram of a communication system 10 according to an example of the present invention. The communication system 10 supports Converged Personal Network Services (CPNS) developed by the Open Mobile Alliance (OMA) . The communication system 10 is briefly composed of a CPNS server CS, PN gateways (PN GWs) PG_A and PG_B, and PN elements (PNEs) P_1-P_6. In practice, an amount of the PN GWs is not limited to two, and an amount of the PNEs managed by each PN GW is also not limited to three.

In detail, in the communication system 10, the CPNS server CS receives requests from a PN GW, and replies responses to the PN GW, to ensure that appropriate applications are selected and appropriate contents are provided to a PNE managed by the PN GW. A PN GW (e.g. PN GW PG_A or PN GW PG_B) serves as an intermediary entity between the PNE and other networks that forwards the requests and the responses between the PNE and the other networks. In the communication system 10, the PNEs P_1-P_3 are managed by the PN GW PG_A, and the PNEs P_4-P_B6 are managed by the PN GW PG_B. In other words, the PN GW PG_A forwards requests, responses and services between the PNEs P_1-P_3 and the CPNS server CS. Similarly, the PN GW PG_B forwards requests, responses and services between the PNEs P_4-P_6 and the CPNS server CS. Preferably, the PNE (e.g. any one of the PNEs P_1-P_6) is a PN entity that is connected to a corresponding PN GW managing the PNE and between each other, and is used for rendering the content received from the corresponding PN GW or from each other. The PNE can be a mobile phone, a personal computer (PC), a music player, a car navigation system or an IP-enabled set-top box. Besides, PNEs P_2-P_4 in the communication system 10 belong to a service group (SG) S_1. Therefore, the PNEs P_2-P_4 can receive the same service (e.g. a game service or a music service) from the CPNS server CS or a content provider.

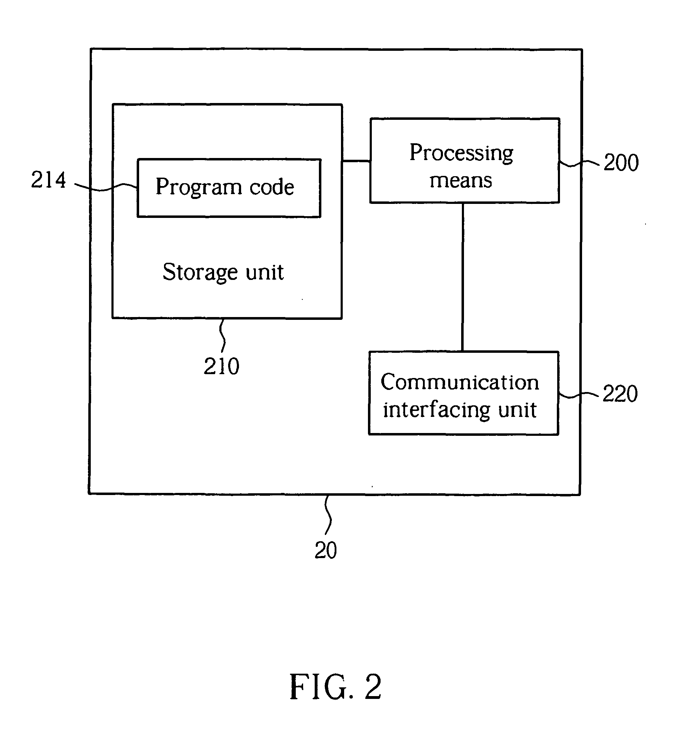

Please refer to Fig. 2, which is a schematic diagram of a communication device 20 according to an example of the present invention. The communication device 20 can be any one of the CPNS server CS, the PN GWs PG_A and PG_B, and the PNEs P_1-P_6 shown in Fig. 1, but is not limited herein. The communication device 20 may include a processor 200 such as a microprocessor or Application Specific Integrated Circuit (ASIC), a storage unit 210 and a communication interfacing unit 220. The storage unit 210 may be any data storage device that can store a program code 214, accessed by the processor 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver and can exchange signals with the server according to processing results of the processor 200.

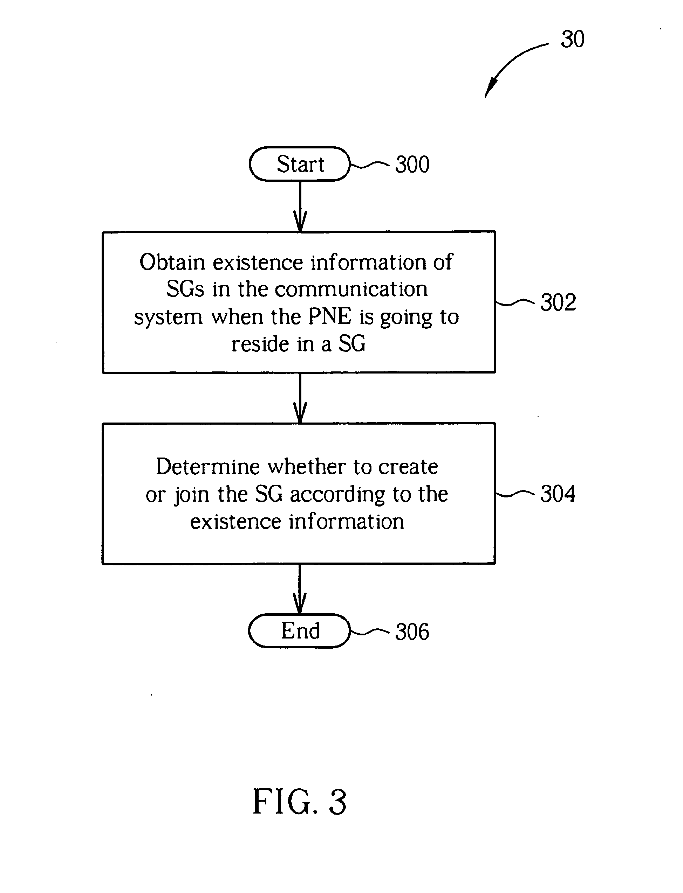

Please refer to Fig. 3, which is a flowchart of a process 30 according to an example of the present invention. The process 30 is utilized in a PNE of the communication system 10 shown in Fig. 1, to handle SG creation. The process 30 may be compiled into the program code 214 and includes the following steps:

Step 300: Start.

Step 302: Obtain existence information of SGs in the communication system when the PNE is going to reside in a SG.

Step 304: Determine whether to create or join the SG according to the existence information.

Step 306: End.

According to the process 30, the PNE shall acquire information associated to the existing SGs in the communication system before creating or joining a SG. Please note that, the information includes information of at least one of services provided by the existing service groups, service description, and PNE identity. Therefore, the PNE can determine whether there is an existing SG providing the same service as the SG that the PNE wants to reside in. If there is an existing SG providing the same service as the SG that the PNE wants to reside in, the PNE may not need to create a new SG for joining, but directly joins the existing SG, so as to avoid redundant SG. On the other hand, if there is no existing SG providing the same service as the SG, the PNE actively creates a new SG for joining.

Take an example based on the process 30. Referring back to Fig. 1, assume that the PNE P_1 wants to reside a SG (e.g. the SG S_1). The PNE firstly queries information associated to the existing SGs in the communication system 10. The existing SGs may be the SGs in a SG inventory stored in the PN-GW PG_A, the CPNS server CS, or the PNE P_1. In detail, the CPNS server CS, the PN GWs PG_A and the PNE P_1 shall maintain their SG inventories to record information related to the SG S_1. For SG information query, the PNE P_1 sends a specific message (e.g. SG Discovery Request) to the PN-GW PG_A or the CPNS server CS, to query information, such as services provided by the existing SGs, service description, and/or PNE identity, of the existing SGs. The PN_GS PG_A or CPNS server CS replies with a specific message (e.g. SG Discovery Response) including information of the services provided by the existing SGs, the service description, and/or the PNE identity, which are stored in the PN_GS PG_A or CPNS server CS.

With SG information query, the PNE P_1 can determine whether to create a new SG or directly join a suitable existing SG. If the SG information indicates that there is an existing SG (i.e. SG S_1) providing the same service (e.g. music service) as a SG (i.e. SG S_2 not shown in Fig. 1) that the PNE P_1 wants to join, the PNE P_1 does not create the SG S_2, but joins the SG S_1. Otherwise, the PNE P_1 creates the SG S_2 for joining the music service.

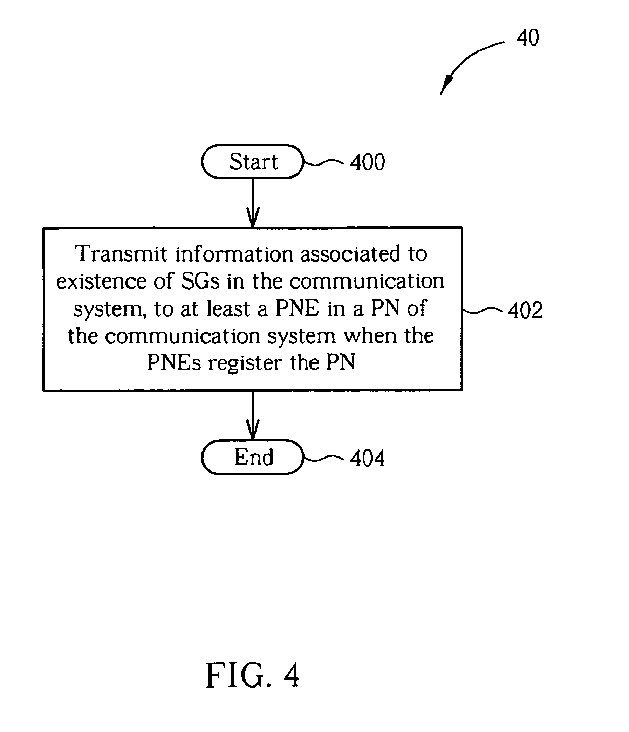

Please refer to Fig. 4, which is a flowchart of a process 40 according to an example of the present invention. The process 40 is utilized in a CPNS server or a PN-GW of the communication system 10 shown in Fig. 1, to handle SG creation. The process 40 may be compiled into the program code 214 and includes the following steps:

Step 400: Start.

Step 402: Transmit information associated to existence of SGs in the communication system, to at least a PNE in a PN of the communication system when the PNEs register the PN.

Step 404: End.

According to the process 40, the PN-GW or CPNS server sends information associated to the existing SGs in the communication system to the PNEs in this PN when the PNEs register the PN. Please note that, the information includes information of at least one of services provided by the existing service groups, service description, and PNE identity. In addition, the information may be included in a broadcast or dedicated message for transmission. Therefore, when a PNE joins a PN (e.g. PN registration is performed), the PNE receives the information, and then determines whether to create a new SG or join a suitable existing SG according to the received information when the PNE wants to reside in a SG. If there is an existing SG providing the same service as the SG that the PNE wants to reside in, the PNE may not create a new SG for joining, but directly joins the existing SG. Detailed description can be referred from above, so it is omitted herein.

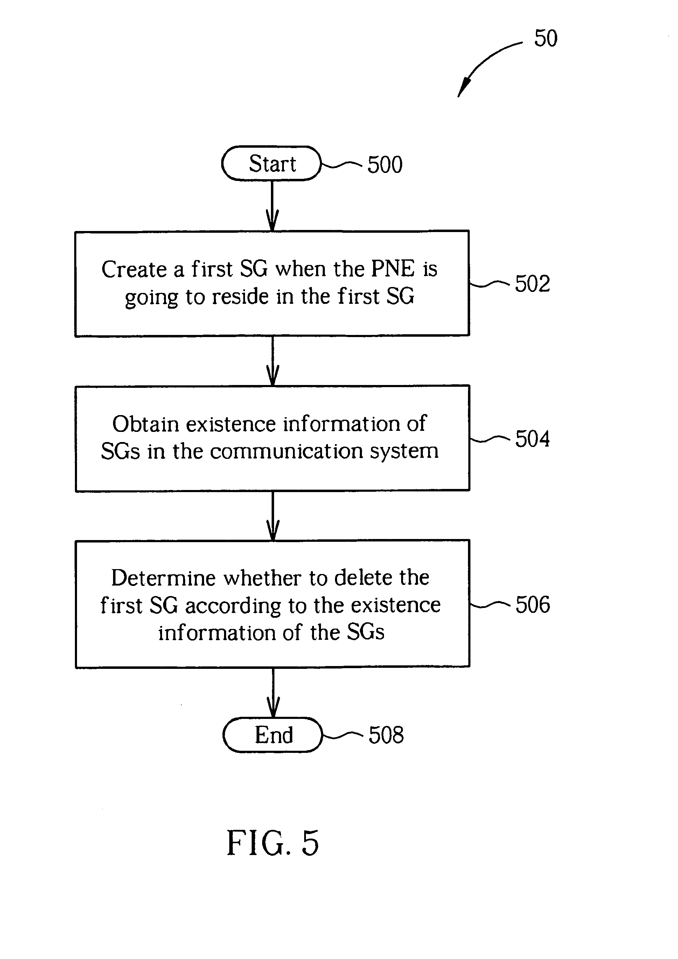

Please refer to Fig. 5, which is a flowchart of a process 50 according to an example of the present invention. The process 50 is utilized in a PNE of the communication system 10 shown in Fig. 1, to handle SG creation. The process 50 may be compiled into the program code 214 and includes the following steps:

Step 500: Start.

Step 502: Create a first SG when the PNE is going to reside in the first SG.

Step 504: Obtain existence information of SGs in the communication system.

Step 506: Determine whether to delete the first SG according to the existence information of the SGs.

Step 508: End.

According to the process 50, the PNE performs SG creation procedure to create a SG when the PNE wants to reside in the SG. Then, the PNE performs a step of storing the SG inventory in the SG creation procedure to obtain SG information associated to the existing SGs in the communication system. After that, the PNE checks the existing SGs and SG description (e.g. service provided) in the SG inventory. If the PNE finds that a SG providing the same service as a SG newly created by the PNE has been existed, the PNE may delete the SG created by itself to prevent SG redundancy.

The abovementioned steps of the processes including suggested steps can be realized by means that could be a hardware, a firmware known as a combination of a hardware device and computer instructions and data that reside as read-only software on the hardware device or an electronic system. Examples of hardware can include analog, digital and mixed circuits known as microcircuit, microchip, or silicon chip. Examples of the electronic system can include a system on chip (SOC), system in package (SiP), a computer on module (COM) and the communication device 20.

In conclusion, the present invention discloses a method of handling SG creation in a communication system and related communication device. A PNE shall acquire information associated to the existing SG before residing in any SG, so as to avoid redundant SG.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method, comprising:
handling service group, SG, creation for a personal network element, PNE, of a communication system according to open mobile alliance, OMA;
creating (502) a first service group when the personal network element is going to reside in the first service group;
obtaining (302,504) existence information of service groups in the
communication system; **characterized by**
deleting (506) the first service group when the existence information of the service groups indicates that a second service group providing the same service as the first service group has been existing.

2. The method of claim 1, further comprising:
storing a service group inventory storing the existence information of service groups for the step of obtaining the existence information.

3. The method of claim 2, further comprising:
checking the existence information of service groups in the service group inventory.

4. The method of any preceding claims, further comprising:
determining (304) whether to create or join the service group according to the existence information.

5. The method of claim 4, wherein determining whether to create or join the service group according to the existence information comprises:
creating no service group when the existence information of the service groups indicates that the service group has been existed.

6. The method of claim 5, further comprising:
joining the service group.

7. The method of claim 1, wherein obtaining existence information of the service groups in the communication system when the personal network element is going to reside in the service group comprises:
transmitting a first message for querying existence information of the service groups, to a personal network of the communication system; and
receiving a second message including the existence information of the service groups and responding to the first message, from the personal network.

8. The method of claim 1, wherein the existence information comprises information of at least one of services provided by the existing service groups, service description, and personal network element identity.

9. The method of claim 4, wherein determining whether to create or join the service group according to the existence information comprises:
creating the service group when the existence information of the service groups indicates that the service group is not existed.

10. The method of claim 4, wherein determining whether to create or join the service group according to the existence information comprises:
creating the service group when the existence information of the service groups indicates that the service group has been existed.

11. The method of any preceding claims, further comprising:
transmitting (402) information associated to existence of the service groups in the communication system, to at least the personal network element (PNE) in the personal network when the personal network elements register the personal network.

12. The method of claim 11, wherein the information is transmitted with a broadcast message or a dedicated message to the personal network element.

13. A communication device (20), comprising:
a processor (200);
a storage unit (210), which is configured to store a program code (214) having instructions, which when executed by the processor causes the processor to perform the method according to any of the preceding
claims 1 to 12.

14. A program code (214) having instructions that when executed by a processor of a communication device causes the processor to perform the method according to any preceding claims 1 to 12.

## Patentansprüche

1. Ein Verfahren, das Folgendes beinhaltet:
Handhaben einer Dienstgruppen-Erstellung (Service-Group-Erstellung, SG-Erstellung) für ein persönliches Netzelement, PNE, eines Kommunikationssystems gemäß der Open Mobile Alliance, OMA;
Erstellen (502) einer ersten Dienstgruppe, wenn das persönliche Netzelement in der ersten Dienstgruppe anwesend sein wird;
Erhalten (302, 504) von Existenzinformationen von Dienstgruppen in dem Kommunikationssystem; **gekennzeichnet durch**:
Löschen (506) der ersten Dienstgruppe, wenn die Existenzinformationen der Dienstgruppen darauf hindeuten, dass eine zweite Dienstgruppe, die denselben Dienst wie die erste Dienstgruppe bereitstellt, bereits existiert.

2. Verfahren gemäß Anspruch 1, das ferner Folgendes beinhaltet:
Speichern einer Dienstgruppen-Bestandsliste, welche die Existenzinformationen von Dienstgruppen für den Schritt des Erhaltens der Existenzinformationen speichert.

3. Verfahren gemäß Anspruch 2, das ferner Folgendes beinhaltet:
Überprüfen der Existenzinformationen von Dienstgruppen in der Dienstgruppen-Bestandsliste.

4. Verfahren gemäß einem der vorhergehenden Ansprüche, das ferner Folgendes beinhaltet:
Bestimmen (304), ob die Dienstgruppe gemäß den Existenzinformationen erstellt werden soll oder ob ihr beigetreten werden soll.

5. Verfahren gemäß Anspruch 4, wobei das Bestimmen, ob die Dienstgruppe gemäß den Existenzinformationen erstellt werden soll oder ob ihr beigetreten werden soll, Folgendes beinhaltet:
Erstellen keiner Dienstgruppe, wenn die Existenzinformationen der Dienstgruppen darauf hindeuten, dass die Dienstgruppe bereits existiert.

6. Verfahren gemäß Anspruch 5, das ferner Folgendes beinhaltet:
Beitreten zur Dienstgruppe.

7. Verfahren gemäß Anspruch 1, wobei das Erhalten von Existenzinformationen der Dienstgruppen in dem Kommunikationssystem, wenn das persönliche Netzelement in der Dienstgruppe anwesend sein wird, Folgendes beinhaltet:
Übertragen einer ersten Nachricht zur Abfrage von Existenzinformationen der Dienstgruppen an ein persönliches Netz des Kommunikationssystems; und
Empfangen einer zweiten Nachricht, die die Existenzinformationen der Dienstgruppen umfasst, und Antworten auf die erste Nachricht aus dem persönlichen Netz.

8. Verfahren gemäß Anspruch 1, wobei die Existenzinformationen Informationen von mindestens einem der Dienste, die von den existierenden Dienstgruppen bereitgestellt werden, Dienstbeschreibung und persönliche Netzelementidentität, beinhalten.

9. Verfahren gemäß Anspruch 4, wobei das Bestimmen, ob die Dienstgruppe gemäß den Existenzinformationen erstellt werden soll oder ob ihr beigetreten werden soll, Folgendes beinhaltet:
Erstellen der Dienstgruppe, wenn die Existenzinformationen der Dienstgruppen darauf hindeuten, dass die Dienstgruppe nicht bereits existiert.

10. Verfahren gemäß Anspruch 4, wobei das Bestimmen, ob die Dienstgruppe gemäß den Existenzinformationen erstellt werden soll oder ob ihr beigetreten werden soll, Folgendes beinhaltet:
Erstellen der Dienstgruppe, wenn die Existenzinformationen der Dienstgruppen darauf hindeuten, dass die Dienstgruppe bereits existiert.

11. Verfahren gemäß einem der vorhergehenden Ansprüche, das ferner Folgendes beinhaltet:
Übertragen (402) von Informationen, die mit der Existenz der Dienstgruppen in dem Kommunikationssystem assoziiert sind, auf mindestens das persönliche Netzelement (PNE) in dem persönlichen Netz, wenn die persönlichen Netzelemente das persönliche Netz registrieren.

12. Verfahren gemäß Anspruch 11, wobei die Informationen mit einer Rundsendungsnachricht oder einer zweckbestimmten Nachricht auf das persönliche Netzelement übertragen werden.

13. Eine Kommunikationsvorrichtung (20), die Folgendes beinhaltet:
einen Prozessor (200);
eine Speichereinheit (210), die konfiguriert ist, um einen Programmcode (214) zu speichern, der Anweisungen aufweist, die, wenn sie von dem Prozessor ausgeführt werden, verursachen, dass der Prozessor das Verfahren gemäß einem der vorhergehenden Ansprüche 1 bis 12 durchführt.

14. Ein Programmcode (214), der Anweisungen aufweist, die, wenn sie von einem Prozessor einer Kommunikationsvorrichtung ausgeführt werden, verursachen, dass der Prozessor das Verfahren gemäß einem der vorhergehenden Ansprüche 1 bis 12 durchführt.

## Revendications

1. Un procédé, comprenant :
gérer la création de groupes de service, SG, pour un élément de réseau personnel, PNE, d'un système de communication selon une alliance mobile ouverte, OMA ;
créer (502) un premier groupe de service lorsque l'élément de réseau personnel va résider dans le premier groupe de service ;
obtenir (302, 504) des informations d'existence de groupes de service dans le système de communication ; **caractérisé par** le fait
de supprimer (506) le premier groupe de service lorsque les informations d'existence des groupes de service indiquent qu'un deuxième groupe de service fournissant le même service que le premier groupe de service existe.

2. Le procédé de la revendication 1, comprenant en outre :
stocker un inventaire de groupes de service stockant les informations d'existence de groupes de service pour l'étape consistant à obtenir les informations d'existence.

3. Le procédé de la revendication 2, comprenant en outre :
vérifier les informations d'existence de groupes de service dans l'inventaire de groupes de service.

4. Le procédé de n'importe quelles revendications précédentes, comprenant en outre :
décider (304) de créer ou de rejoindre le groupe de service selon les informations d'existence.

5. Le procédé de la revendication 4, dans lequel la décision de créer ou de rejoindre le groupe de service selon les informations d'existence comprend :
ne créer aucun groupe de service lorsque les informations d'existence des groupes de service indiquent que le groupe de service existe.

6. Le procédé de la revendication 5, comprenant en outre :
rejoindre le groupe de service.

7. Le procédé de la revendication 1, dans lequel l'obtention d'informations d'existence des groupes de service dans le système de communication lorsque l'élément de réseau personnel va résider dans le groupe de service comprend :
transmettre un premier message pour interroger des informations d'existence des groupes de service à un réseau personnel du système de communication ; et
recevoir un deuxième message incluant les informations d'existence des groupes de service et répondre au premier message, depuis le réseau personnel.

8. Le procédé de la revendication 1, dans lequel les informations d'existence comprennent des informations d'au moins l'un des services fournis par les groupes de service existants, la description de service et l'identité d'élément de réseau personnel.

9. Le procédé de la revendication 4, dans lequel la décision de créer ou de rejoindre le groupe de service selon les informations d'existence comprend :
créer le groupe de service lorsque les informations d'existence des groupes de service indiquent que le groupe de service n'existe pas.

10. Le procédé de la revendication 4, dans lequel la décision de créer ou de rejoindre le groupe de service selon les informations d'existence comprend :
créer le groupe de service lorsque les informations d'existence des groupes de service indiquent que le groupe de service existe.

11. Le procédé de n'importe quelles revendications précédentes, comprenant en outre :
transmettre (402) des informations associées à l'existence des groupes de service dans le système de communication, au moins à l'élément de réseau personnel (PNE) dans le réseau personnel lorsque les éléments de réseau personnel enregistrent le réseau personnel.

12. Le procédé de la revendication 11, dans lequel les informations sont transmises avec un message diffusé ou un message dédié à l'élément de réseau personnel.

13. Un dispositif de communication (20), comprenant :
un processeur (200) ;
une unité de stockage (210), laquelle est configurée pour stocker un code de programme (214) ayant des instructions, lesquelles, lorsqu'elles sont exécutées par le processeur, amènent le processeur à effectuer le procédé selon n'importe lesquelles des revendications précédentes 1 à 12.

14. Un code de programme (214) ayant des instructions qui, lorsqu'elles sont exécutées par un processeur d'un dispositif de communication, amènent le processeur à effectuer le procédé selon n'importe lesquelles des revendications précédentes 1 à 12.
MURG * 124969
